## Europäisches Patentamt
## European Patent Office
## Office européen des brevets

(19)

(11) Veröffentlichungsnummer : **0 103 091**
**B1**

(12)

# EUROPÄISCHE PATENTSCHRIFT

(45) Veröffentlichungstag der Patentschrift :
09.10.85

(21) Anmeldenummer : 83106531.3

(22) Anmeldetag : 05.07.83

(51) Int. Cl.⁴ : **C 09 C 1/34, C 01 B 13/18,
C 01 G 37/00, C 01 B 13/32**

(54) Mischphasen auf Basis von Bismut- und Chromoxiden sowie ein Verfahren zu deren Herstellung.

(30) Priorität : 17.07.82 DE 3226891
30.04.83 DE 3315849

(43) Veröffentlichungstag der Anmeldung :
21.03.84 Patentblatt 84/12

(45) Bekanntmachung des Hinweises auf die Patenterteilung : 09.10.85 Patentblatt 85/41

(84) Benannte Vertragsstaaten :
DE FR GB IT

(56) Entgegenhaltungen :
EP-A- 0 099 499
DE-A- 1 592 388
DE-A- 2 135 184
CHEMICAL ABSTRACTS, Band 72, Nr. 14, 6. April
1970, Seite 411, Nr. 71837a, Columbus, Ohio, USA
KUNIO MASUNO: "Crystal studies of the Bi203-Ce203
system"
CHEMICAL ABSTRACTS, Band 88, Nr. 24, 12. Juni
1978, Seite 490, Nr. 177845x, Columbus, Ohio, USA
MASANORI INADA: "Crystal phases of nonohmic
zinc oxide ceramics"

(73) Patentinhaber : BAYER AG
Konzernverwaltung RP Patentabteilung
D-5090 Leverkusen 1 Bayerwerk (DE)

(72) Erfinder : Köhler, Peter, Dr.
Bethelstrasse 10
D-4150 Krefeld 11 (DE)
Erfinder : Ringe, Peter, Dr.
Nittumer Weg 24
D-5060 Bergisch-Gladbach (DE)
Erfinder : Heine, Heinrich, Dr.
Bärenstrasse 13
D-4150 Krefeld 1 (DE)

EP 0 103 091 B1

Jouve, 18, rue St-Denis, 75001 Paris, France

## Beschreibung

Die vorliegende Erfindung betrifft gelbe bis orangerote Bismutoxid/Chromoxid-Mischphasen der Zusammensetzung $Bi_{2-x}Cr_xO_3$ (0,05 ⩽ x ⩽ 0,5) mit spezifischen Oberflächen von 1,0 bis 10 m²/g sowie ein Verfahren zu deren Herstellung in Pigmentqualität.

Reines Bismutrioxid ($Bi_2O_3$) existiert in vier verschiedenen Modifikationen. Bei Raumtemperatur ist nur die α-Phase stabil, im Temperaturbereich zwischen 717 und 825 °C wird δ-$Bi_2O_3$ als Hochtemperaturphase erhalten, während β- und γ-$Bi_2O_3$ metastabil sind (Gmelins Handbuch der anorganischen Chemie, Bd. 19, S. 629 (1964) 8. Auflage).

Durch Zusatz von Metalloxiden wie z. B. $Sb_2O_3$, $Al_2O_3$, $Ga_2O_3$, $In_2O_3$, $Y_2O_3$, $Fe_2O_3$, $Cr_2O_3$, $ZrO_2$, $SiO_2$ oder $GeO_2$ zur $Bi_2O_3$-Schmelze sind nach dem Abkühlen die tetragonale β- sowie die kubische γ-Phase bei Raumtemperatur stabilisierbar (G. Gattow, H. Schröder ; Z. anorg. allg. Chem. 318 (1962), S. 176).

In der DE-B-1 592 388 wird die Mischphasenbildung von $Bi_2O_3$ mit einer Vielzahl 1- bis 6 wertiger Metalloxide durch Glühen homogener Mischungen entsprechender Komponenten beschrieben, wobei je nach chemischer Zusammensetzung die verschiedenen Modifikationen des $Bi_2O_3$ zugänglich sind. Durch den Einbau von $Cr_2O_3$ werden nach diesem Verfahren lediglich Produkte mit tomatenroter Farbe erhalten, die aufgrund der niedrigen BET-Oberflächen (weniger als 1 m²/g) jedoch nur mindere Pigmentqualität besitzen.

Die Aufgabe der vorliegenden Erfindung ist es, Bismutoxid/Chromoxid-Mischphasen der Zusammensetzung $Bi_{2-x}Cr_xO_3$ von hoher Brillanz in Pigmentqualität nach einem einfachen und wirtschaftlichen Verfahren zur Verfügung zu stellen.

Überraschenderweise wurde nun gefunden, daß gelbe bis orangerote Bismutoxid/Chromoxid-Mischphasen in Pigmentqualität vorliegen können, wenn ihr $Cr_2O_3$-Anteil zwischen ca. 0,8 und 9,7 Gew.-% $Cr_2O_3$ beträgt.

Gegenstand der vorliegenden Erfindung sind somit Bismut-oxid-Chromoxid-Mischphasen der Zusammensetzung $Bi_{2-x}Cr_xO_3$ mit spezifischen Oberflächen von 1,0 bis 10 m²/g und Werten für x von 0,05 bis 0,5.

Besonders gute farbmetrische Daten weisen dabei solche erfindungsgemäßen Pigmente auf, deren spezifische Oberflächen zwischen 1,5 und 8 m²/g liegen. Die Bestimmung der BET-Oberfläche geschieht nach der $N_2$-Methode entsprechend DIN 661 131.

Die vorliegende Erfindung betrifft auch ein Verfahren zur Herstellung der erfindungsgemäßen Pigmente, das dadurch gekennzeichnet ist, daß man entsprechende Mengen feindisperser Bismut-(III)- und Chrom-(III)- bzw. Chrom-(VI)-Verbindungen mischt, bei Temperaturen zwischen 500 und 800 °C an Luft glüht und anschließend mahlt. Weitere Merkmale des Verfahrens sind in den Unteransprüchen 7 bis 9 angegeben.

Es muß als überraschend gewertet werden, daß durch dieses einfache Verfahren gelbe bis orangerote Mischphasen-Pigmente mit großer Farbreinheit erhalten werden.

Als Bismutkomponenten sind Bismuthydroxid sowie basisches Bismutcarbonat geeignet, die nach dem Stand der Tecknik durch Fällung vom Bismut-III-Nitratlösungen mit Alkalihydroxiden und/oder Alkalicarbonaten hergestellt werden können. Hierbei ist jedoch eine große Salzbelastung im Abwasser (Alkalinitrate) zu bewältigen.

Überraschenderweise sind oxidische Bismutverbindungen, die sich hervorragend für die Pigmentsynthese eignen, auch ohne den Anfall von löslichen Salzen zugänglich, wenn metallisches Bismutpulver in wäßriger Suspension bei Temperaturen zwischen 20 und 100 °C mit bekannten Rühraggregaten wie Perlmühlen, Dissolvern oder Kotthoff-Mischsirenen intensiv dispergiert wird. Geeignete Bismut-Metallpulver werden entweder durch mechanische Zerkleinerung von Bismutbarren in Kugel- oder Mörsermühlen oder durch Verdüsen einer Bismutschmelze in Wasser erhalten, wobei der bevorzugte Kornanteil < 100 µm durch Siebung abgetrennt werden kann. Je nach Korngröße des Metallpulvers und Höhe der Temperatur kann die Umsetzung in die Bismut/Sauerstoff-Verbindungen verschieden lange dauern. Eine Begasung mit Luft, Luft/Sauerstoff-Gemischen und/oder Sauerstoff beschleunigt diesen Prozeß ebenso wie die Verwendung feinteiliger Bismutpulver.

Weniger geeignet als Bismutrohstoff ist Bismutoxid ($Bi_2O_3$), das bei nur einmaliger Glühung Pigmente von deutlich schlechterer Farbqualität liefert.

Als Chromquellen können $Cr_2O_3$ (BET-Oberflächen > 2,5 m²/g), $CrO_3$, CrOH (BET-Oberflächen > 5 m²/g), Cr-(III)-Acetat (BET-Oberflächen > 5 m²/g) sowie gefällte Cr-(III)-Hydroxide (BET-Oberflächen > 10 m²/g) Verwendung finden.

Das Mischen der jeweiligen Komponenten kann sowohl im trockenen als auch im feuchten Zustand in Mischaggregaten wie z. B. Intensivmischern, Mühlen, Knetern, Schnecken oder Rührbehältern vorgenommen werden.

Wenn man für die Herstellung der Rohstoffmischung von oxidischen Bismutverbindungen ausgeht, die durch intensives Dispergieren feinteiliger Bismut-Metallpulver in wäßriger Suspension zugänglich sind, so können die erforderlichen Cr-Verbindungen während oder nach der Bismutmetall-Umwandlung im gleichen Dispergieraggregat zugegeben werden. Anschließend folgen Filtration und Trocknung der Rostoffmischung.

2

Eine weitere Möglichkeit zur Herstellung homogener Rohstoffmischungen stellt die Mischfällung von Bismut-III- und Chrom-III-hydroxiden in den gewünschten Mengenverhältnissen durch gemeinsames Fällen einer Bismut-(III)-Nitratlösung und Chrom-(III)-Salzlösung (z. B. Cr-(III)-Nitrat oder Cr-(III)-Acetat in $HNO_3$) mit Alkalihydroxiden bzw. Alkalicarbonaten bei pH-Werten oberhalb von 7,0 dar. Anschließend wird filtriert und nitratfrei gewaschen, wobei sehr homogene Rohstoffpasten mit Feststoffgehalten zwischen 30 und 50 % anfallen.

Zur Trocknung der feuchten Pasten können Sprühtrockner, Trockenschränke, Walzentrockner und Bandtrockner verwendet werden. Die Zerkleinerung zu homogenen Pulvermischungen (Restfeuchte bis ca. 5 Gew.-%) kann in Stiftmühlen, Kugelmühlen, Pendelmühlen oder ähnlichen Aggregaten erfolgen.

Die Herstellung von Granulat bzw. Pellets aus der feuchten Rohstoffmischung ist während der Trocknung mit Schnecken, Walzentrocknern oder Aggregaten der Formgranulierung möglich (Restfeuchte bis zu 30 Gew.-%).

Die feuchte Paste kann auch direkt zur Glühung eingesetzt werden, wobei der Feuchtegehalt aus wirtschaftlichen Gründen nicht über 35 Gew.-% liegen sollte.

Die Glühung der Rohstoffmischungen (Pulver, Granulat oder feuchte Paste) kann in direkt oder indirekt beheizten Öfen mit oder ohne Produktbewegung an Luft erfolgen. Geeignete Glühaggregate sind beispielsweise Kammer-, Muffel-, Drehtrommel-, Drehrohr- oder Drehringherdöfen.

Nach der Glühung erfolgte eine trockene Vorzerkleinerung der Produkte (z. B. in Mörsermühlen) sowie eine Naßmahlung in Perl- oder Kugelschwingmühlen (Mahldauer zwischen 5 min und 3 h). Anschließend wird filtriert, gewaschen, bei 105 °C getrocknet und in einer Mühle desagglomeriert.

Die Farbtonvariation der Bismutoxid/Chromoxid-Mischphasen (gelb bis orangerot) ist sowohl von der Mischphasenzusammensetzung ($Bi_{2-x}Cr_xO_3$ mit $0,05 \leqslant x \leqslant 0,5$) als auch von der Teilchengröße der Endprodukte abhängig.

Die Teilchengrößen der Bismutoxid/Chromoxid-Mischphasenpigmente sind im wesentlichen durch die Höhe der Glühtemperatur (500-750 °C) steuerbar. Es werden Produkte mit spezifischen Oberflächen zwischen 1,0 und 10 m²/g erhalten (bestimmt nach BET-Methode gemäß DIN 661 131), wobei als überraschend gewertet werden muß, daß ein hoher $Cr_2O_3$-Gehalt die Farbverschiebung von orangerot nach gelb entscheiden beeinflußt.

Alle Mischphasen sind röntgenographisch phasenrein und besitzen die Struktur des $\beta$-$Bi_2O_3$ (Beispiele 1-12).

Die Umsetzung homogener Mischungen von $Bi_2O_3$ und $CrO_3$ bzw. $Cr_2O_3$ bei Temperaturen von 750 °C liefert bei einmaliger Glühung im Drehrohrofen deutlich schlechtere Endprodukte (braunorange Farbtöne, teilweise schmutzig) als nach dem erfindungsgemäßen Verfahren hergestellte, was den Fortschritt gegenüber dem in der DE-A-1 592 388 beschriebenen Verfahren eindeutig belegt.

Die erfindungsgemäß hergestellten orangeroten bis gelben Bismutoxid/Chromoxid-Mischphasenpigmente mit spezifischen Oberflächen von vorzugsweise 1,5 bis 8 m²/g eignen sich zur Einfärbung von Lacken, Kunststoffen und Dispersionsfarben.

Nachfolgend wird die Erfindung anhand von Beispielen erläutert.

Beispiel 1

222,39 g gepulvertes metallisches Bismut wurden in 450 ml 64,5 %iger Salpetersäure gelöst, mit 1,5 l Wasser bei Raumtemperatur auf einen pH-Wert von ca. 1,5 gestellt und unter Rühren 10,91 g $Cr(NO_3)_3 \cdot 9H_2O$ zugegeben (5-l-Rührbehälter). Die Fällung erfolgte mit 50 %iger KOH bei Raumtemperatur bis ca. pH 10. Es wurde noch 30 min homogenisiert (Mischsirene), filtriert, nitratfrei gewaschen, die hellgrüne Paste bei 105 °C getrocknet und in einer Kugelmühle zerkleinert.

Je 1/8 der Rohstoffmischung wurden 1 h in einem Muffelofen bei 500 °C, 575 °C und 725 °C an Luft geglüht. 5/8 dieser Mischung wurden 1 h bei 650 °C wie oben beschrieben geglüht. Alle Glühprodukte wurden 10 min. in einer Mörsermühle gemahlen, wobei die Farbtöne von Gelborange (500 °C-Glühung) bis Rotorange (725 °C-Glühung) variierten.

Aufgrund der chemischen Analyse hatten die Produkte die Zusammensetzung $Bi_{1,9}Cr_{0,05}O_3$ ($0,8 \pm 0,05$ %$Cr_2O_3$ ; $99,0 \pm 0,1$ % $Bi_2O_3$).

Die bei 650 °C geglühte Charge wurde anschließend mit unterschiedlicher Intensität naß gemahlen und folgende Ergebnisse erhalten :

| Mahlung | Farbton | BET-Oberfläche m²/g |
|---|---|---|
| 10 Min Wedagmühle | Orangerot | 1,0 |
| 10 min Wedagmühle + 1 h Kugelschwingmühle (naß) | Orange | 1,4 |

| M a h l u n g | F a r b t o n | BET-Oberfläche $m^2/g$ |
|---|---|---|
| 10 min Wedagmühle + 3 h Kugelschwingmühle (naß) | Orange | 1,7 |
| 10 min Wedamühle + 1 h Sandmühle (naß) | Gelborange | 3,9 |

Beispiel 2

212,05 g gepulvertes metallisches Bismut wurden in 425 ml 64,5 %iger Salpetersäure gelöst, mit 1,5 l Wasser bei Raumtemperatur auf einen pH-Wert von 1,5 gestellt und unter Rühren 71,65 g $Cr(NO_3)_3 \cdot 9H_2O$ zugegeben (5-l-Rührbehälter). Fällung und weitere Verarbeitung der Hydroxidpaste erfolgten entsprechend Beispiel 1.

Je 1/4 der pulverförmigen Rohstoffmischung (Restfeuchte < 5 %) wurden 1 h bei Temperaturen von 500/575/650/725 °C im Muffelofen an Luft geglüht.

Nach Mahlung der Glühprodukte in einer Mörsermühle (10 min) wurden die Mischphasen bei Raumtemperatur 30 min in Wasser gerührt (< 20 % Feststoffanteil), filtriert, gewaschen, getrocknet und desagglomeriert.

Aufgrund der chemischen Analyse ergab sich für die Produkte die Zusammensetzung $Bi_{1,7}Cr_{0,3}O_3$ (5,30 ± 0,15 % $Cr_2O_3$ ; 94,60 ± 0,2 % $Bi_2O_3$). Die Abhängigkeit des Farbtones und der BET-Oberfläche von der Glühtemperatur ist der nachfolgenden Tabelle zu entnehmen :

| Glühtemperatur | F a r b t o n | BET-Oberfläche $m^2/g$ |
|---|---|---|
| 500 | Gelborange | 4,5 |
| 575 | Hellorange | 3,1 |
| 650 | Orange | 1,6 |
| 725 | Orangerot | 1,0 |

Beispiel 3

508,90 g gepulvertes metallisches Bismut wurden in 1 l 64,5 %iger Salpetersäure gelöst, mit 3,5 l Wasser bei Raumtemperatur auf einen pH-Wert von 1,5 gestellt und unter Rühren 171,90 g $Cr(NO_3)_3 \cdot 9H_2O$ zugegeben (10-l-Rührbehälter). Fällung und weitere Verarbeitung der Hydroxidpaste erfolgten entsprechend Beispiel 1.

Jeweils die Hälfte der pulverförmigen Rohstoffmischung (Restfeuchte < 3 %) wurden bei 575 bzw. 725 °C 1 h im Muffelofen geglüht und anschließend wie in der nachfolgenden Tabelle angegeben mit unterschiedlicher Intensität gemahlen. Nach Filtration, Waschschritt und Trocknung wurde eine chemische Zusammensetzung der Produkte von $Bi_{1,7}Cr_{0,3}O_3$ erhalten (5,35 ± 0,15 % $Cr_2O_3$ ; 94,50 % ± 94,50 % ± 0,3 $Bi_2O_3$).

Die Farbbeurteilung und spezifischen Oberflächen der unterschiedlich geglühten und unterschiedlich gemahlenen Mischphasenpigmente sind ebenfalls der Tabelle zu entnehmen :

| Glühtemperatur °C | M a h l u n g | F a r b t o n | BET-Oberfläche $m^2/g$ |
|---|---|---|---|
| 575 | 30 min Mörsermühle | | 6,2 |
| | 5 min Mörsermühle 1 h Kugelschwingmühle | Gelborange | 6,2 |
| | 5 min Mörsermühle, 3 h Kugelschwingmühle | | 5.6 |

4

(Fortsetzung)

| Glühtemperatur °C | Mahlung | Farbton | BET-Oberfläche m²/g |
|---|---|---|---|
| | 5 min Mörsermühle, 1 h Sandmühle | | 7,2 |
| 725 | 30 min Mörsermühle | Orangerot | 1,0 |
| | 5 min Mörsermühle 1 h Kugelschwingmühle | Orange | 1,5 |
| | 5 min Mörsermühle, 3 h Kugelschwingmühle | Hellorange | 2,7 |
| | 5 min Mörsermühle, 1 h Sandmühle | Gelborange | 5,8 |

## Beispiel 4

In einem 10-l-Rührbehälter wurden 94,01 g Cr-III-Acetat (29,1 % $Cr_2O_3$) mit 400 ml 65,8 %iger $HNO_3$ gelöst, anschließend 3,1 l Wasser zugegeben und unter Rühren 1 006,96 g $Bi(NO_3)_3 \cdot 5H_2O$ eingetragen (Raumtemperatur). Die Lösung hatte einen pH-Wert von 1,5 und wurde bei RT mit KOH-Lösung (~ 31,5 %ig) innerhalb von 15 min auf einen pH-Wert von ca. 8 gestellt. Es bildete sich eine grüne Suspension, die noch 30 min bei pH ~ 8 gerührt und entsprechend Beispiel 1 weiterverarbeitet wurde.

Die pulverisierte Rohstoffmischung wurde sowohl im Muffelofen als auch im Drehrohr an Luft geglüht (jeweils 2 h bei 750 °C) und die Glühprodukte ohne Vorzerkleinerung 5 min in einer Sandmühle gemahlen.

Nach Filtration, Waschen und Trocknung bei 105 °C wurden orange bis orangerote Mischphasenpigmente der Zusammensetzung $Bi_{1,7}Cr_{0,3}O_3$ (5,30 ± 0,15 % $Cr_2O_3$, 94,50 ± 0,1 % $Bi_2O_3$) erhalten. Die BET-Oberflächen lagen bei 1,2 ± 0,1 m²/g.

## Beispiel 5

355,3 g gepulvertes metallisches Bismut wurden in einem 5-l-Rührbehälter mit 677 ml $HNO_3$ (~ 68 %ig) gelöst (Temperaturerhöhung bis auf ca. 55 °C) und anschließend die klare Bi-III-Nitrat-Lösung innerhalb von 60 min mit ca. 30,5 %iger KOH-Lösung auf einen pH-Wert von ~ 7 gestellt. Die weiße Suspension von Bi-Hydroxid wurde noch 30 min gerührt, die Mutterlauge dekantierend entfernt und 29,27 g $Cr_2O_3$ (als 77,8 %ige Filterpaste) mit einer Kotthoff-Mischsirene innerhalb von 10 min untergepastet. Die Suspension wurde filtriert, nitratfrei gewaschen und nach dem Trocknen zu einem homogenen Pulver zerkleinert.

Die Glühung der Rohstoffmischung erfolgte in einem Drehrohrofen an Luft bei 750 °C und dauerte 2 bzw. 16 h (langsames Aufheizen der Mischung von RT bis zur Endtemperatur). Die Glühprodukte wurden ohne Vorzerkleinerung 5 min naß in einer Sandmühle gemahlen, filtriert, gewaschen, bei 105 °C getrocknet und desagglomeriert.

Als Endprodukte wurden orange Mischphasenpigmente der Zusammensetzung $Bi_{1,7}Cr_{0,3}O_3$ (5,25 ± 0,15 % $Cr_2O_3$ ; 94,60 ± 0,2 % $Bi_2O_3$) mit BET-Oberflächen von 1,4 ± 0,1 m²/g erhalten.

## Beispiel 6

Entsprechend Beispiel 5 wurde eine Bi-Hydroxid-Suspension hergestellt, 35,51 g Cr-Hydroxid (65,2 % $Cr_2O_3$) untergemischt und wie in Beispiel 5 verfahren. Nach der üblichen Mahlung und Aufarbeitung wurden orange Mischphasenpigmente der Zusammensetzung $Bi_{1,7}Cr_{0,3}O_3$ (5,30 ± 0,2 % $Cr_2O_3$ ; 94,6 ± 0,25 % $Bi_2O_3$) mit BET-Oberflächen von 1,5 ± 0,1 m²/g erhalten.

## Beispiel 7

0,897 kg $CrO_3$ (99 %ig, Merck) wurden in 10 l Wasser gelöst und unter Rühren 13,150 kg basisches Bismutcarbonat (90,1 % $Bi_2O_3$) portionsweise mit weiteren 7,5 l Wasser zugegeben (30 l Rührbehälter mit Kotthoff-Mischsirene). Die Suspension wurde 1 h homogenisiert (pH-Wert ~ 2,5 ; Feststoffgehalt < 50 %) und auf Blechen bei 105 °C auf eine Restfeuchte von weniger als 2 % getrocknet. Die Zerkleinerung auf Pulverfeinheit erfolgte in einer Trockenmühle. Anschließend wurde eine Hälfte der Rohstoffmischung 4 h bei 750 °C im Muffelofen (Porzellantiegel) geglüht und die andere Hälfte 4 h bei 750 °C im Drehrohr umgesetzt.

Die Glühprodukte wurden trocken vorzerkleinert (15 min Mörsermühle), 5 min naß in einer Sandmühle gemahlen, filtriert, gewaschen und bei 105 °C getrocknet.

Es wurden jeweils 6,1 kg oranges Mischphasenpigment der Zusammensetzung $Bi_{1,7}Cr_{0,3}O_3$ ($5,4 \pm 0,1$ % $Cr_2O_3$ ; $94,5 \pm 0,1$ % $Bi_2O_3$) erhalten. Die spezifischen Oberflächen nach BET lagen bei $1,9 \pm 0,1$ m²/g.

## Beispiel 8

447,03 g basisches Bismutcarbonat (88,6 % $Bi_2O_3$) und 29,74 g Chromoxidfilterabwurf (77,9 % $Cr_2O_3$) wurden mit 500 ml Wasser in einer Kotthoff-Mischsirene intensiv gemischt (ca. 48 % Feststoff) und mit wenig $HNO_3$ auf einen pH-Wert von 2,5 gestellt.

Nach dem Trocknen der Paste (bei 105 °C im Trockenschrank) und der Zerkleinerung zu einem homogenen Pulver erfolgte die Glühung im Drehrohrofen an Luft bei Temperaturen von 700 bzw. 750 °C (2 h).

Die Calcinate wurden trocken vorzerkleinert (15 min Mörsermühle) und 5 min naß in einer Sandmühle gemahlen. Es folgten Filtration, Waschschritt und Trocknung bei 105 °C.

Die orange gefärbten Bismutoxid/Chromoxid-Mischphasenpigmente hatten die Zusammensetzung $Bi_{1,7}Cr_{0,3}O_3$ ($5,35 \pm 0,1$ % $Cr_2O_3$ ; $94,4 \pm 0,1$ % $Bi_2O_3$) sowie spezifische Oberflächen nach BET von $1,8 \pm 0,1$ m²/g.

## Beispiel 9

202,25 g metallisches fein gepulvertes Bismut wurden in einen 5-l-Rührbehälter mit 400 ml 64,5 %iger $HNO_3$ gelöst und bei Raumtemperatur mit ca. 1,5 l Wasser ein pH-Wert von 1,5 eingestellt. In die klare Bi-III-Nitrat-Lösung wurden 129,08 g $Cr(NO_3)_3 \cdot 9H_2O$ eingetragen und der pH-Wert mit 50 %iger KOH bei RT auf 10 angehoben. Es bildete sich eine grüne Suspension, die nach 30 minütigem Homogenisieren filtriert, gewaschen (nitratfrei), bei 105 °C getrocknet und zu einem einheitlichen Pulver zerkleinert wurde.

Je 1/3 der Rohstoffmischung wurde 1 h bei Temperaturen von 575, 650 und 725 °C an Luft in einem Muffelofen geglüht, 10 min trocken vorzerkleinert und 60 min naß in einer Sandmühle gemahlen. Nach Filtration, Waschen und Trocknung wurden die in der nachfolgenden Tabelle beschriebenen Mischphasenpigmente der Zusammensetzung $Bi_{1,5}Cr_{0,5}O_3$ ($9,70 \pm 0,1$ % $Cr_2O_3$, $90,0 \pm 0,1$ % $Bi_2O_3$) erhalten :

| Glühung und Mahlung | Farbton | BET-Oberfläche m²/g |
|---|---|---|
| 1 h 575°C, 60 min Sandmühle | Gelb | 9,2 |
| 1 h 650°C 60 min Sandmühle | | 8,1 |
| | Goldgelb | |
| 1 h 725°C, 60 min Sandmühle | | 8,3 |

## Beispiel 10

568,42 g Bismut-Metallpulver (< 40 µm, 99,99 %ig) und 6 l Wasser wurden in einem 10-l-Glasstutzen unter Sauerstoffeinleitung 4 h bei ca. 70 °C mit einer Kotthoff-Mischsirene gerührt (2 800 Upm). Die nach 4 h gebildete gelbweiße Suspension wurde mit 48,00 g $CrO_3$ versetzt und weitere 4 h mit der Kotthoff-Mischsirene bei ~ 70 °C homogenisiert. Die orangebraune Rohstoffmischung wurde filtriert, bei 105 °C getrocknet und in einer Mühle pulverisiert.

je 150 g dieser Rohstoffmischung wurden unter folgenden Bedingungen in einem Drehrohrofen an Luft geglüht :

a) Hochheizen der Mischung von Raumtemperatur auf 750 °C innerhalb von 6 h und 3 h bei der Endtemperatur belassen.

b) Direkt in den heißen Ofen gegeben und 6 h bei 750 °C belassen.

c) Direkt in den heißen Ofen gegeben und 16 h bei 750 °C belassen.

d) Direkt in den heißen Ofen gegeben und 32 h bei 750 °C belassen.

Die Glühprodukte wurden trocken vorzerkleinert (5 min Mörsermühle), 5 min bei 1 500 Upm naß in einer Rührwerkskugelmühle gemahlen, filtriert, gewaschen und bei 105 °C getrocknet.

Eine Charakterisierung der Produkte ist der nachfolgenden Tabelle zu entnehmen :

| Glühbedingungen | | Farbton | BET-Oberfläche $m^2/g$ |
|---|---|---|---|
| a) | von RT auf 750°C 3 h bei 750°C | | 1,9 |
| b) | direkt im heißen Ofen, 6 h bei 750°C | orangerot | 1,8 |
| c) | direkt im heißen Ofen, 16 h bei 750°C | | 1,6 |
| d) | direkt im heißen Ofen, 32 h bei 750°C | | 1,6 |

Diese Mischphasen besitzen aufgrund der chemischen Analyse die Zusammensetzung $Bi_{1,7}Cr_{0,3}O_3$ mit $5,4 \pm 0,15\%$ $Cr_2O_3$ und $94,6 \pm 0,2\%$ $Bi_2O_3$.

Beispiel 11

518,32 g Bismut-Metallpulver ($< 40$ µm ; 99,99 %ig) wurden entsprechend Beispiel 10 zu Bismuthydroxid umgesetzt und anschließend 70,72 g $CrO_3$ (99 %ig) zugegeben. Nach 4-stündiger Homogenisierung im gleichen Aggregat bildete sich eine orange gefärbte Suspension, die filtriert, gewaschen und bei 105 °C getrocknet wurde. Die getrocknete Rohstoffmischung wurde zu einem Pulver zerteilt und wie folgt im Drehrohr an Luft geglüht :
   a) 300 g 6 h bei 600 °C, direkt in heißen Ofen gegeben.
   b) 300 g 6 h bei 650 °C, direkt in heißen Ofen gegeben.
Die Glühprodukte wurden trocken vorzerkleinert (5 min Mörsermühle) naß in einer Rührwerkskugelmühle gemahlen (5 min, 1 500 Upm), filtriert, gewaschen und bei 10 % °C getrocknet.
Die Mischphasen haben die Zusammensetzung $Bi_{1,55}Cr_{0,45}O_3$ und lassen sich wie folgt charakterisieren :

| Glühbedingungen | Farbton | BET-Oberfläche $m^2/g$ |
|---|---|---|
| a) 6 h bei 600°C | gelb | 3,4 |
| b) 6 h bei 650°C | goldgelb | 2,5 |

Vergleichsbeispiel

a. 796,11 g $Bi_2O_3$ (99,5 %ig) und 60,60 g $CrO_3$ (99,0 %ig) wurden mit 250 ml Wasser in einer Kotthoff-Mischsirene zu einer homogenen Paste verarbeitet (ca. 75 % Feststoffanteil, pH-Wert ~ 6). Nach Trocknung der Rohstoffmischung (105 °C) und Zerkleinerung zu einem feinteiligen Pulver erfolgte die Glühung im Drehrohrofen (2 h, 750 °C). Das Calcinat wurde 5 min in einer Sandmühle gemahlen, filtriert, gewaschen und getrocknet.
Aufgrund der Analyse hatte das bräunlich-orange gefärbte Endprodukt die Zusammensetzung $Bi_{1,7}Cr_{0,3}O_3$ (5,30 $ $Cr_2O_3$ ; 94,50 % $Bi_2O_3$).
b. 796,11 g $Bi_2O_3$ (99,5 %ig) und 58,56 g Chromoxidpaste (77,9 % $Cr_2O_3$) wurden entsprechend Beispiel a. gemischt, geglüht und aufgearbeitet.
Das Endprodukt war olivstichig braunorange gefärbt und hatte die Zusammensetzung $Bi_{1,7}Cr_{0,3}O_3$ (5,40 % $Cr_2O_3$, 94,40 % $Bi_2O_3$).
In beiden Fällen führte die Verwendung des $Bi_2O_3$ zu Produkten von minderer Farbqualität.

**Patentansprüche**

1. Bismutoxid-Chromoxid-Mischphasen der Zusammensetzung $Bi_{2-x}Cr_xO_3$, dadurch gekennzeichnet, daß sie spezifische Oberflächen von 1,0 bis 10 m²/g aufweisen und x-Werte von 0,05 bis 0,5 einnehmen.

2. Bismutoxid-Chromoxid-Mischphasen gemäß Anspruch 1, dadurch gekennzeichnet, daß die spezifischen Oberflächen bevorzugt im Bereich von 1,5 bis 8 m²/g liegen.

3. Verfahren zur Herstellung von gelben bis orangeroten Bismutoxid/Chromoxid-Mischphasen gemäß den Ansprüchen 1 und 2, dadurch gekennzeichnet, daß man entsprechende Mengen feindisperser Bismut-(III)- und Chrom-(III)- bzw. Chrom-(VI)-Verbindungen mischt, bei Temperaturen zwischen 500 und 800 °C an Luft glüht und anschließend mahlt.

4. Verfahren gemäß Anspruch 3, dadurch gekennzeichnet, daß die Bismut-(III)-Verbindungen Bismuthydroxid sowie basisches Bismutcarbonat sind.

5. Verfahren gemäß den Ansprüchen 3 und 4, dadurch gekennzeichnet, daß als oxidische Bismut-III-Verbindung eine solche eingesetzt wird, die durch intensives Dispergieren von metallischem Bismut in wäßriger Suspension erhalten wird.

6. Verfahren gemäß den Ansprüchen 3 und 4, dadurch gekennzeichnet, daß die Chromkomponenten Chrom-(III)-oxid, Chromhydroxid, Chrom-(VI)-oxid, Chrom-(III)-Acetat und/oder Chromoxidhydroxid sind.

7. Verfahren gemäß den Ansprüchen 3 bis 5, dadurch gekennzeichnet, daß die Umsetzung bei Temperaturen zwischen 500 und 800 °C, vorzugsweise zwischen 600 und 750 °C, erfolgt.

8. Verfahren gemäß den Ansprüchen 3 bis 6, dadurch gekennzeichnet, daß die Umsetzung mit oder ohne Produktbewegung in einem Glühschritt erfolgt.

9. Verfahren gemäß den Ansprüchen 3 bis 7, dadurch gekennzeichnet, daß die Umsetzung zwischen 0,5 und 32 h, vorzugsweise zwischen 2 und 16 h, dauert.

10. Verwendung der gemäß einem der Ansprüche 1 bis 8 hergestellten Bismutoxid/Chromoxid-Mischphasenpigmente zur Einfärbung von Lacken, Kunststoffen und Dispersionsfarben.

## Claims

1. Bismuth oxide-chromium oxide mixed phases of the composition $Bi_{2-x}Cr_xO_3$, characterised in that they have specific surfaces of 1.0 to 10 m²/g and x values of 0.05 to 0.5.

2. Bismuth oxide-chromium oxide mixed phases according to Claim 1, characterised in that the specific surfaces are preferably within the range of 1.5 to 8 m²/g.

3. Process for the preparation of yellow to orange-red bismuth oxide/chromium oxide mixed phases according to Claims 1 and 2, characterised in that appropriate quantities of finely dispersed bismuth(III) compounds and chromium(III) or chromium(VI) compounds are mixed, the mixtures are calcined in air at temperatures between 500 and 800 °C and subsequently ground.

4. Process according to Claim 3, characterised in that the bismuth(III) compounds are bismuth hydroxide and basic bismuth carbonate.

5. Process according to Claims 3 and 4, characterised in that the oxidic bismuth(III) compound used is one which is obtained by intensively dispersing metallic bismuth in an aqueous suspension.

6. Process according to Claims 3 and 4, characterised in that the chromium components are chromium(III) oxide, chromium hydroxide, chromium(VI) oxide, chromium(III) acetate and/or chromium oxide hydroxide.

7. Process according to Claims 3 to 5, characterised in that the reaction is carried out at temperatures between 500 and 800 °C, preferably between 600 and 750 °C.

8. Process according to Claims 3 to 6, characterised in that the reaction is carried out in one calcining step with or without movement of the product.

9. Process according to Claims 3 to 7, characterised in that the reaction lasts between 0.5 and 32 h, preferably between 2 and 16 h.

10. Use of the bismuth oxide/chromium oxide mixed phase pigments prepared according to one of Claims 1 to 8 for colouring lacquers, plastics and dispersion paints.

## Revendications

1. Phases mixtes d'oxyde de bismuth et d'oxyde de chrome de composition $Bi_{2-x}Cr_xO_3$, caractérisées en ce qu'elles présentent des surfaces spécifiques de 1,0 à 10 m²/g et prennent des valeurs x de 0,05 à 0,5.

2. Phases mixtes d'oxyde de bismuth et d'oxyde de chrome suivant la revendication 1, caractérisées en ce que les surfaces spécifiques se situent avantageusement dans l'intervalle de 1,5 à 8 m²/g.

3. Procédé de production de phases mixtes oxyde de bismuth/oxyde de chrome allant du jaune au rouge orangé suivant les revendications 1 et 2, caractérisé en ce qu'on mélange des quantités correspondantes de composés de bismuth-(III) et de chrome-(III) ou de chrome-(VI) finement dispersés, on calcine les mélanges dans l'air à des températures comprises entre 500 et 800 °C, puis on les broie.

4. Procédé suivant la revendication 3, caractérisé en ce que les composés de bismuth-(III) sont l'hydroxyde de bismuth ainsi que le carbonate de bismuth basique.

5. Procédé suivant les revendications 3 et 4, caractérisé en ce qu'on utilise comme composé oxydique de bismuth-(III) un composé qui est obtenu par dispersion énergique de bismuth métallique en suspension aqueuse.

**0 103 091**

6. Procédé suivant les revendications 3 et 4, caractérisé en ce que les composants contenant du chrome sont l'oxyde de chrome-(III), l'hydroxyde de chrome, l'oxyde de chrome-(VI), l'acétate de chrome-(III) et/ou l'oxyde-hydroxyde de chrome.

7. Procédé suivant les revendications 3 à 5, caractérisé en ce qu'on conduit la réaction à des températures comprises entre 500 et 800 °C, de préférence entre 600 et 750 °C.

8. Procédé suivant les revendications 3 à 6, caractérisé en ce qu'on conduit la réaction dans une étape de calcination avec ou sans mise en mouvement du produit.

9. Procédé suivant les revendications 3 à 7, caractérisé en ce que la réaction a une durée de 0,5 à 32 heures, de préférence de 2 à 16 heures.

10. Utilisation des pigments en phases mixtes oxyde de bismuth/oxyde de chrome produits selon l'une des revendications 1 à 8 pour colorer des laques, des matières plastiques et des peintures au latex.